# EUROPÄISCHE PATENTSCHRIFT

(11) **EP 2 033 923 B1**
(45) Veröffentlichungstag und Bekanntmachung des Hinweises auf die Patenterteilung: **06.05.2015**
(21) Anmeldenummer: 08021316.8
(22) Anmeldetag: 14.03.2007
(51) Int. Cl.: B66B 1/30, H02K 16/04, B66B 5/00, B66B 11/04

(54) **Verfahren zum Überwachen einer federkraftbetätigten Bremse**
Method for monitoring a brake activated by tension
Procédé de surveillance d'un frein actionné par la force du ressort

(30) Priorität: 16.03.2006 EP 06005374
(43) Veröffentlichungstag der Anmeldung: 11.03.2009
(62) Teilanmeldung aus: 07723256.9
(73) Patentinhaber: ThyssenKrupp Elevator AG, 45143 Essen (DE)
(72) Erfinder: Breidenstein, Olaf, 90449 Nürnberg (DE); Gessner, Torsten, 40885 Ratingen (DE); Hermann, Günter, 73669 Lichtenwald (DE); Jetter, Markus, 70794 Filderstadt (DE); Möllgaard, Nils-Anton, 73614 Schorndorf (DE); Resag, Uwe, 72631 Aichtal (DE); Schulze, Jochen, 72770 Reutlingen (DE); Vogler, Eberhard, 73765 Neuhausen (DE); Wilhelm, Andreas, 73116 Wäschenbeuren (DE)
(74) Vertreter: m patent group

(56) Entgegenhaltungen:
- EP-A2- 0 183 616
- WO-A2-2004/110916
- DE-A1- 3 934 492
- US-A- 5 265 701
- US-A- 5 323 878
- US-A- 5 377 788

## Beschreibung

Die Erfindung betrifft ein Verfahren zum Überwachen einer federkraftbetätigten Bremse und eine Bremseinrichtung für eine Aufzuganlage.

Bei Aufzügen wird insbesondere auf eine Überwachung der Bremsen geachtet. Im Anschluss wird eine Federbruchüberwachung bei federkraftbetätigter Sicherheitsbremse beschrieben. Dieses Prinzip kann Anwendung bei einem Aufzugantrieb und einem Elektromotor für Aufzugantriebe finden.

Das Prinzip der federkraftbetätigten Bremse als Sicherheitsbauteil ist im Stand der Technik bekannt. Dabei wird eine elektromechanisch, hydraulisch oder auf ähnliche Weise vorgespannte Feder im Bremsfall genutzt, um die Federkraft als Bremskraft über Bremsbeläge oder andere Einrichtungen auf Bremsscheiben, Bremstrommeln oder ähnliche Einrichtungen wirken zu lassen. Da oftmals die Energie zum Vorspannen der Feder dauernd vorgehalten werden muss, führt dies bei Energieausfall unweigerlich zur Betätigung der Bremse, was unter dem Begriff "Fail Save" bekannt ist.

Das Einsatzgebiet dieser federkraftbetätigten Bremsen ist weit. Sie kommen dort zum Einsatz, wo Antriebe abgebremst oder gehalten werden müssen. So werden solche federkraftbetätigten Bremsen beispielsweise bei Aufzugsantrieben, Seilbahnantrieben, Jahrmarktfahrgeschäften, Windkraftanlagen usw. verwendet. In diesen Anwendungsgebieten erfüllen die federkraftbetätigten Bremsen sicherheitstechnische Aufgaben. So muss beispielsweise die Anlage kurzzeitig betriebsmäßig im Stillstand gehalten werden oder im Notfall die komplette Anlage abgebremst und zum Stillstand geführt werden, um Gefahren von Personen oder der Anlage abzuwenden.

Das beschriebene Prinzip der Bremse hat jedoch bei bestimmten Voraussetzungen Nachteile. Die als Spiral- oder Tellerfedern genutzten Federn, die einzeln oder im Paket verwendet werden, können brechen oder weich werden und somit kräftemäßig nachgeben. Daher muss der Zustand der Bremse und der Bremsfedern regelmäßig überprüft werden. Wenn die vorgespannt gehaltene Feder oder auch die Federpakete durch Gehäuse oder andere Maschinenteile abgedeckt oder von außen nicht sichtbar sind, kann der Zustand der Federn nicht visuell erkannt werden. Eine häufige Betätigung der Bremse, beispielsweise bei einer betriebsmäßigen Haltefunktion der Bremse, kommt vor, wenn die Anlage kurz in Betrieb ist und dann in einem geänderten Zustand wieder festgehalten werden muss.

Insbesondere im Aufzugbetrieb ist eine derartige Haltebremse bei jeder einzelnen Fahrt in Aktion. In jeder Haltestelle, bei der der Aufzug hält, wird der Aufzugfahrkorb über seinen Antrieb durch eine derartige Bremse gehalten. Dabei wird beim betriebsmäßigen Halt in den Haltestellen der Aufzugfahrkorb in vielen Aufzuganlagen nicht direkt durch die Bremse gehalten, sondern indirekt durch Angreifen der Bremsen an den Seilen, an der Treibscheibe oder am Antrieb. Beim Fahrbeginn wird die Bremse wieder gelöst, so kann über die Lebensdauer der Bremse eine sehr hohe Schaltanzahl an Bremsschließen und -öffnen erreicht werden, so dass im Laufe der Zeit die Federn oder die Federpakete durch Dauerbruch, Materialermüdung oder dergleichen versagen können. Wenn nun auch die Federn in einem Gehäuse oder ähnlichem eingebaut sind, ist es äußerst schwierig ein derartiges Versagen einer einzelnen Feder in diesem Federpaket zu erkennen. Dies ist jedoch unter dem Aspekt der Sicherheit nicht hinnehmbar, da ein Versagen einer Feder oder mehrerer Federn in einem Paket zu einem Bremskraftverlust oder sogar zum kompletten Ausfall der Bremskraft führt.

Bei federkraftbetätigten Bremsen, die hydraulisch gelüftet werden, ist der versteckte bzw. verdeckte Federeinbau sehr oft der Fall, da das Federpakt bestehend aus Tellerfedern in einer Bremszange oder einer entsprechenden Vorrichtung eingebaut ist und die hydraulischen Bereiche flüssigkeitsdicht ausgeführt sein müssen. Um das Versagen einer einzelnen Feder in einem Paket erkennen zu können, muss die komplette Bremszange zerlegt werden, was zu längeren Betriebsunterbrechungen führt.

Beispielsweise wird in der US 5,323,878 A eine hydraulisch gelüftete, federkraftbetätigte Bremse gezeigt. Zum Öffnen der Bremse wird ein Hydraulikzylinder mit unter konstantem Druck stehender Hydraulikflüssigkeit befüllt. Ein Versagen der Feder kann nicht festgestellt werden.

Es stellt sich somit die Aufgabe, ein sicheres und schnelles Feststellen von Federbruch oder anderem Federversagen von Bremsfedern, insbesondere bei in Gehäusen oder versteckt eingebauten, also nicht visuell überwachbaren Federn von Sicherheitsbremsen, zu gewährleisten.

Das erfindungsgemäße Verfahren dient zum Überwachen einer federkraftbetätigten Bremse, wobei eine zum Spannen bzw. Vorspannen mindestens einer Feder benötigte Kraft bzw. ein dazu benötigter Kraftaufwand berücksichtigt wird.

Es ist vorgesehen, dass die Kraft, die zum Erreichen einer Endlage der mindestens einen Feder erforderlich ist, berücksichtigt wird. Diese Endlage kann über eine vorgesehene Einrichtung abgefragt werden.

Die mindestens eine Feder kann elektromechanisch, elektrisch, mechanisch, pneumatisch oder hydraulisch gespannt bzw. vorgespannt werden. Als Federn kommen bspw. Spiral- oder Tellerfedern in Betracht. Es können einzelne oder in Paketen zusammengefasste Federn sein.

Bei einer hydraulisch gelüfteten Bremse wird bspw. ein Öldruck-Zeit-Verlauf detektiert. Der hydraulische Druck wird dabei vorzugsweise mittelbar oder unmittelbar in dem hydraulischen Ölsystem über geeignete Einrichtungen abgefragt.

Das beschriebene Verfahren kommt bspw. in einem Aufzugantrieb oder mit einem Elektromotor zur Anwendung.

Das beschriebene Verfahren beruht somit auf der Erkennung eines Versagens einer Feder oder mehrerer Federn ohne visuelle Kontrolle im laufenden Betrieb. Dazu wird die Bremse typischerweise über entsprechende Schalter und Sensoren überwacht und über eine Steuerung wird die Überwachung entsprechend ausgewertet. Ein auftretender Mangel kann so rechtzeitig erkannt werden und es kann eine Warnung oder Meldung erfolgen. Die Federn, die nicht mehr funktionstüchtig sind, können ersetzt werden, bevor eine Betriebsstörung auftritt.

Es wird davon ausgegangen, dass teilweise oder einzeln durch Versagen ausgefallenen Federn einen veränderten, üblicherweise verringerten Kraftaufwand zum Vorspannen benötigen. Bei einer hydraulisch gelüfteten Bremse kann diese geringe Öffnungskraft bspw. über den Öldruck-Zeit-Verlauf erfasst werden. Dabei wird mit einem Öldruckmesser der aktuelle Öldruck vorzugsweise in unmittelbarer Nähe in der Zuleitung zu der Bremszange gemessen. Zusätzlich wird in der Endlage der vorgespannten Feder diese Endlage über Kontakte oder geeignete Einrichtungen erkannt. Es ergibt sich dann eine logische Verknüpfung dieser beiden Ereignisse zur Erkennung eines Versagens oder teilweise Versagens einer Feder.

Wenn die Endlage der Feder im Normalfall detektiert wird, wird immer zuerst das Signal des erreichten maximalen hydraulischen Drucks angegeben und dann das Endlagensignal der Feder. Im Falle eines Federbruchs reicht jedoch bereits ein geringerer Öldruck aus, um die Feder in die Endlage zu bringen bzw. die Bremse zu öffnen, so dass das Endlagensignal zeitlich vor dem maximalen Öldrucksignal gegeben wird. Durch entsprechende Wahl des Einstellwerts eines Drucksensors lässt sich zum Beispiel diese Überwachung einstellen. Der eingestellte, zu überwachende Druckwert muss unter dem Öldruck liegen, der betriebsmäßig mindestens üblicherweise zur Öffnung der hydraulischen Bremse notwendig ist. Die Auswertung dieser Signale kann nun über eine analoge oder digitale Steuerung erfolgen, die dann das Ergebnis "OK" oder "Federbruch" liefert.

Durch regelmäßige Prüfungen in kurzen oder längeren Abständen kann die Bremse stetig überwacht werden. Alternativ kann die Auswertung bei jeder Betätigung der Bremse durchgeführt werden.

Neben dem hydraulischen Spannen der Feder und der Überwachung des Öldrucks und eventuell der zum Erreichen des Drucks erforderlichen Zeit kann auch eine andere Spannkraft verwendet und überwacht werden. So kann die Feder bspw. pneumatisch oder auch elektrisch mit Magnetspulen gespannt werden. Dabei werden die auftretenden elektrischen Werte mit entsprechenden vorgegebenen Werten verglichen. Bei weiterer Berechnung und Vergleich mit der Endlagenüberwachung kann dann "OK" oder "Alarm" angezeigt werden.

Die erfindungsgemäße Bremseinrichtung kommt in einer Aufzuganlage zum Einsatz und wird durch Federkraft betätigt. Die Bremseinrichtung dient insbesondere zur Durchführung eines Verfahrens der beschriebenen Art. Bei dieser ist eine Einrichtung zur Überwachung einer Kraft, die zum Spannen mindestens einer Feder erforderlich ist, vorgesehen.

Die Bremseinrichtung wird durch Federkraft betätigt, wobei bspw. durch mindestens eine Feder ein Reibbelag gegen eine Bremsfläche gedrückt und dabei eine Bremskraft erzeugt wird. Diese Bremskraft verzögert die translatorisch oder rotatorisch gegenüber dem Bremsbelag bewegte Bremsfläche.

Wird die Endlage der Feder überwacht, bietet es sich an, die ermittelten Werte mit vorgegebenen Werten zu vergleichen. Bei Über- oder Unterschreiten vorgegebener Grenzwerte wird "Alarm" gegeben.

Typischerweise ergibt die Überwachung der Endlage der vorgespannten Feder und die Überwachung des Vorspannens der Feder Werte, die miteinander und mit einer zeitlichen Abfolge ihres Auftretens verarbeitbar bzw. vergleichbar sind.

In Ausgestaltung des Verfahrens bzw. der Bremseinrichtung werden die Abfragen der Endlage der vorgespannten Feder und des Vorspanndrucks, bspw. des hydraulischen Vorspanndrucks, mit einer Logik oder einer entsprechenden Einrichtung verknüpft und mit vorgegebenen Werten verglichen. Bei einer Abweichung von vorgegebenen Werten wird ein Federbruch erkannt.

Grundsätzlich kann für die Überwachung des Vorspannens der Feder eine aufzuwendende Kraft und/oder eine aufzuwendende Zeit herangezogen werden. Die Endlage der vorgespannten Feder kann entweder direkt an den Federelementen oder indirekt über mittelbar und unmittelbar damit verbundene Elemente abgefragt werden. Dabei kann die Endlage über irgendeine Einrichtung bzw. über irgendwelche Einrichtungen ermittelt werden. So kann in einem hydraulischen Ölsystem der hydraulische Druck mittelbar oder unmittelbar über irgendwelche geeigneten Einrichtungen abgefragt werden.

Kommt die beschriebene Bremseinrichtung, bspw. eine Trommelbremse, bei einem schwimmenden Gehäuse zum Einsatz, ist es erforderlich, dass beim Bremsen eine Gegenkraft erzeugt wird.

Ein bevorzugter Aufzugantrieb weist eine vorstehend erörterte Bremseinrichtung nach Anspruch 7 auf, insbesondere zur Durchführung eines Verfahrens nach einem der Ansprüche 1 bis 6.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

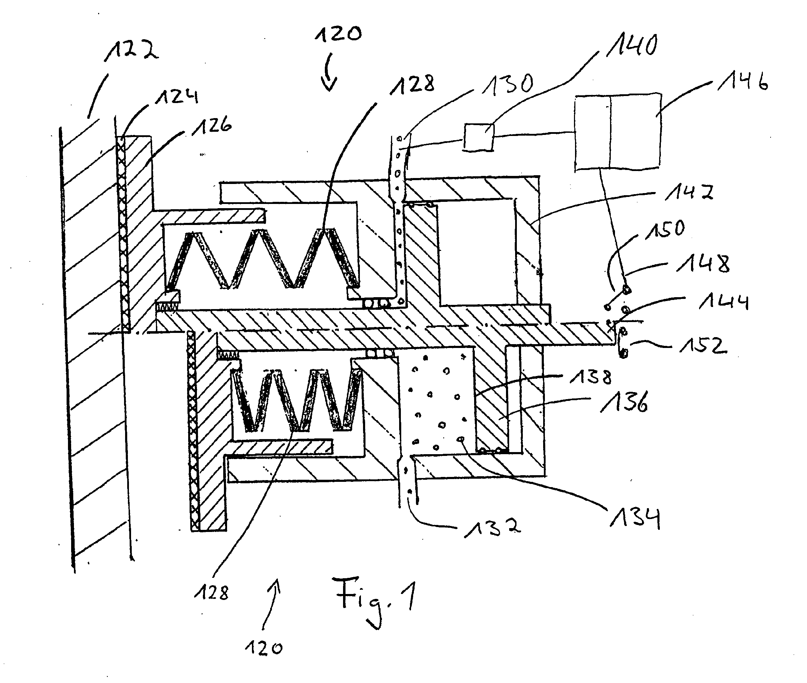

- Figur 1: zeigt in schematischer Darstellung eine Bremse mit hydraulischer Bremslüftung.

In Figur 1 ist schematisch eine Bremse 120 mit hydraulischer Bremslüftung gezeigt, wobei in der oberen Hälfte die Bremse 120 in betriebsmäßig bremsendem Zustand und in der unteren Hälfte in gelüftetem Zustand dargestellt ist.

Die Darstellung zeigt eine Bremsscheibe 122, einen Bremsbelag 124, eine Druckplatte 126, eine Feder 128, eine Ölleitung 130 für Zufuhr und Abfuhr, einen Zufluß 132 für ein Druckmedium 134, bspw. ein Drucköl, einen Kolben 136 mit Kolbenfläche 138, eine Öldrucküberwachung 140, ein Gehäuse 142 und eine Druckstange 144.

In der oberen Hälfte der Darstellung liegt der Bremsbelag 124 an der Bremsscheibe 122 an. Die Feder 128 ist in entspanntem Zustand. In der unteren Hälfte wird nicht gebremst und die Feder 128 befindet sich in vorgespanntem Zustand.

Zur Überwachung der Bremse 120 ist eine Einrichtung 146 zur Überwachung des zeitlichen Verlaufs des Öldrucks vorgesehen. Diese Einrichtung 146 kann ebenfalls das Signal eines Endlageschalters 148 einlesen und auswerten. In der oberen Hälfte ist der Schalter geöffnet 150, in der unteren Hälfte ist dieser geschlossen 152. In dieser Stellung wird nun überprüft, ob der zum Erreichen der Endlage erforderliche Kraftaufwand einem vorgegebenen Wert entspricht.

## Patentansprüche

1. Verfahren zum Überwachen einer federkraftbetätigten Bremse (120), bei dem eine zum Spannen mindestens einer Feder (128) der federkraftbetätigten Bremse benötigte Kraft berücksichtigt wird,
wobei die Kraft und/oder die Zeit, die zum Erreichen einer Endlage der mindestens einen Feder (128) erforderlich ist, überwacht werden, wobei die Endlage in einer geöffneten Stellung der Bremse (120) erreicht ist.

2. Verfahren nach Anspruch 1, bei dem die Endlage über eine vorgesehene Einrichtung (148) abgefragt wird.

3. Verfahren nach einem der Ansprüche 1 bis 2, bei dem die mindestens eine Feder (128) elektromechanisch, elektrisch, mechanisch, pneumatisch oder hydraulisch vorgespannt wird.

4. Verfahren nach einem der Ansprüche 1 bis 3, das bei einer hydraulisch gelüfteten Bremse (120) herangezogen wird, wobei ein Öldruck-Zeit-Verlauf detektiert wird und/oder in der Endlage überprüft wird, ob die zum Erreichen der Endlage erforderliche Kraft einem vorgegebenen Wert entspricht.

5. Verfahren nach Anspruch 4, bei dem der hydraulische Druck mittelbar oder unmittelbar in dem hydraulischen Ölsystem über geeignete Einrichtungen (140) abgefragt wird.

6. Verfahren nach einem der Ansprüche 1 bis 5, das in einem Aufzugantrieb oder mit einem Elektromotor ausgeführt wird.

7. Bremseinrichtung für eine Aufzuganlage, die durch Federkraft betätigt wird, insbesondere zur Durchführung eines Verfahrens nach einem der Ansprüche 1 bis 6, bei der eine Einrichtung (140) zur Überwachung einer Kraft, die zum Spannen mindestens einer Feder (128) zum Erreichen einer Endlage erforderlich ist, wobei die Endlage die geöffnete Stellung der Bremse (120) ist, vorgesehen ist.

8. Aufzugantrieb mit einer Bremseinrichtung (120) nach Anspruch 7, insbesondere zur Durchführung eines Verfahrens nach einem der Ansprüche 1 bis 6.

## Claims

1. A method for monitoring a brake (120) which is operated by spring force, wherein a force which is required to load or bias at least one spring (128) of the spring force operated brake is taken into account, wherein the force and/or the time which is required for the at least one spring (128) to reach a limit position is monitored, wherein the limit position is reached in an open position of the brake.

2. The method as claimed in claim 1, in which the limit position is checked by means of a device (148) provided therefor.

3. The method as claimed in any one of claims 1 to 2, in which the at least one spring (128) is biased electromechanically, electrically, mechanically, pneumatically or hydraulically.

4. The method as claimed in any one of claims 1 to 3, which is used for a hydraulically ventilated brake (120), with an oil-pressure/time profile being detected and/or a check being carried out in the limit position to determine whether the applied force required to reach the limit position corresponds to a predetermined value.

5. The method as claimed in claim 4, in which the hydraulic pressure is checked indirectly or directly in the hydraulic oil system via suitable devices (140).

6. The method as claimed in any one of claims 1 to 5, which is carried out in an elevator drive or with an electric motor.

7. A braking device for an elevator installation, the braking device being operated by spring force, particularly for carrying out a method according to any one of claims 1 to 6, wherein it is provided a device (140) for monitoring a force which is required to bias at least one spring (128) to reach a limit position, wherein the limit position is the open position of the brake.

8. An elevator drive comprising a braking device (120) according to claim 7, particularly for carrying out a method according to any one of claims 1 to 6.

## Revendications

1. Procédé pour surveiller un frein (120) qui est actionné par une force de ressort, dans lequel une force qui est requise pour charger ou rappeler au moins un ressort (128) du frein actionné par la force de ressort est prise en compte, dans lequel la force et/ou le temps qui est requis pour que le au moins un ressort (128) atteigne une position limite est surveillé, dans lequel la position limite est atteinte dans une position ouverte du frein.

2. Procédé selon la revendication 1, dans lequel position limite est contrôlée au moyen d'un dispositif (148) prévu pour celle-ci.

3. Procédé selon l'une quelconque des revendications 1 à 2, dans lequel le au moins un ressort (128) est rappelé de manière électromécanique, électrique, mécanique, pneumatique ou hydraulique.

4. Procédé selon l'une quelconque des revendications 1 à 3, qui est utilisé pour un frein ventilé hydrauliquement (120), un profil de pression d'huile/temps étant détecté et/ou un contrôle étant effectué dans la position limite pour déterminer si la force appliquée requise pour atteindre la position limite correspond à une valeur prédéterminée.

5. Procédé selon la revendication 4, dans lequel la pression hydraulique est contrôlée indirectement ou directement dans le système d'huile hydraulique via des dispositifs (140) adaptés.

6. Procédé selon l'une quelconque des revendications 1 à 5, qui est mis en oeuvre dans un mécanisme d'entraînement d'ascenseur ou avec un moteur électrique.

7. Dispositif de freinage pour une installation d'ascenseur, le dispositif de freinage étant actionné par une force de ressort, en particulier pour mettre en oeuvre un procédé selon l'une quelconque des revendications 1 à 6, dans lequel il est prévu un dispositif (140) pour surveiller une force qui est requise pour rappeler au moins un ressort (128) pour atteindre une position limite, dans lequel la position limite est la position ouverte du frein.

8. Mécanisme d'entraînement d'ascenseur comportant un dispositif de freinage (120) selon la revendication 7, en particulier pour mettre en oeuvre un procédé selon l'une quelconque des revendications 1 à 6.
